# EUROPÄISCHE PATENTANMELDUNG

(11) **EP 1 248 197 A2**
(43) Veröffentlichungstag der Anmeldung: **09.10.2002**
(21) Anmeldenummer: 02006839.1
(22) Anmeldetag: 26.03.2002
(51) Int. Cl.: G06F 11/36

(54) **Verfahren zum Emulieren einer programmgesteuerten Einheit**

(30) Priorität: 04.04.2001 DE 10116864
(71) Anmelder: Infineon Technologies AG, 81669 München (DE)
(72) Erfinder: Barrenscheen, Jens, 81669 München (DE); Pichl, Werner, 85386 Eching (DE)
(74) Vertreter: Repkow, Ines, Dr. Dipl.-Ing.

(57) **Zusammenfassung**

Es wird ein Verfahren zum Emulieren einer programmgesteuerten Einheit beschrieben, bei welchem ein von der programmgesteuerten Einheit ausgeführtes Anwendungsprogramm unterbrochen werden kann, um eine Debug-Sequenz auszuführen, durch welche für die Emulation erforderliche oder hilfreiche Aktionen ausgeführt werden. Das beschriebene Verfahren zeichnet sich dadurch aus, daß die Ausführung der Debug-Sequenz durch das Anwendungsprogramm veranlaßt wird. Dadurch können auch für zeitkritische Anwendungen eingesetzte programmgesteuerte Einheiten wunschgemäß und ohne Störung des die programmgesteuerte Einheit enthaltenden Systems emuliert werden.

## Beschreibung

Die vorliegende Erfindung betrifft ein Verfahren gemäß dem Oberbegriff des Patentanspruchs 1, d.h. ein Verfahren zum Emulieren einer programmgesteuerten Einheit, bei welchem ein von der programmgesteuerten Einheit ausgeführtes Anwendungsprogramm unterbrochen werden kann, um eine Debug-Sequenz auszuführen, durch welche für die Emulation erforderliche oder hilfreiche Aktionen ausgeführt werden.

Programmgesteuerte Einheiten wie Mikroprozessoren, Mikrocontroller, Signalprozessoren etc. sind seit vielen Jahren in unzähligen Ausführungsformen bekannt und bedürfen keiner näheren Erläuterung.

Das Emulieren einer solchen oder anderen programmgesteuerten Einheit dient dazu, in der programmgesteuerten Einheit, oder in dem die programmgesteuerte Einheit enthaltenden System auftretende Fehler zu erkennen, zu lokalisieren, und zu beheben.

Die Emulation erfolgt unter Verwendung eines Emulators, welcher eine spezielle, zur Emulation geeignete Version einer programmgesteuerten Einheit und eine die Emulation steuernde Steuereinheit enthält. Die im Emulator enthaltene programmgesteuerte Einheit ersetzt während der Emulation die programmgesteuerte Einheit des zu untersuchenden Systems. Die Steuereinheit ist im Zusammenwirken mit in der programmgesteuerte Einheit vorhandenen Debug-Ressourcen in der Lage, das Auftreten vorgebbarer Zustände oder Ereignisse zu erkennen und auf eine ebenfalls vorgebbare Art und Weise auf das Auftreten dieser Zustände oder Ereignisse zu reagieren.

Die vorgebbaren Zustände oder Ereignisse bestehen beispielsweise darin, daß innerhalb oder außerhalb der programmgesteuerten Einheit bestimmte Daten, Adressen oder Steuersignale transferiert werden oder gespeichert sind.

Die vorgebbaren Reaktionen auf das Auftreten solcher oder anderer Zustände oder Ereignisse umfassen beispielsweise das Anhalten der programmgesteuerten Einheit, das Auslesen und/oder das Verändern der Inhalte von Registern oder internen oder externen Speichern, und/oder die Aufzeichnung und Auswertung der zuvor und/oder danach auftretenden Verläufe von interessierenden Daten, Adressen, Signalen, und/oder Register- und Speicherinhalten.

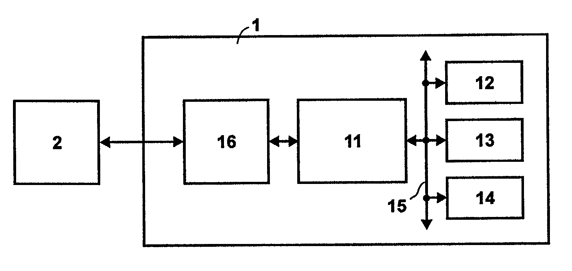

Der prinzipielle Aufbau eines Emulators, der hierzu in der Lage ist, ist in der Figur gezeigt. Der Vollständigkeit halber sei angemerkt, daß in der Figur nur die vorliegend besonders interessierenden Komponenten des Emulators gezeigt sind.

Der Emulator besteht aus einer programmgesteuerten Einheit 1 und einer die Emulation steuernden Steuereinheit 2.

Die programmgesteuerte Einheit 1 umfaßt eine CPU 11, Peripherie-Einheiten 12, 13 und 14 wie beispielsweise Timer, A/D-Wandler, Speicher etc., einen die CPU 11 und die Peripherie-Einheiten 12 bis 14 verbindenden Bus 15, und mit der CPU 11 und der Steuereinheit 2 verbundene Debug-Ressourcen 16.

Der Vollständigkeit halber sei angemerkt, daß die programmgesteuerte Einheit aus einem oder mehreren Halbleiter-Chips bestehen kann. Insbesondere können (müssen aber nicht) die Debug-Ressourcen 16 auf einem eigenen Halbleiter-Chip untergebracht sein; eine solche programmgesteuerte Einheit ist in der DE 197 432 64 A1 beschrieben.

Während der Emulation führt die programmgesteuerte Einheit das im normalen Betrieb des zu untersuchenden Systems auszuführende Anwendungsprogramm aus. Dabei werden durch die Debug-Ressourcen 16 und die Steuereinheit 2 das Auftreten bestimmter Zustände oder Ereignisse überwacht und die eingangs genannten oder andere für das Erkennen, Lokalisieren und Beheben von Fehlern erforderliche oder nützliche Aktionen vorgenommen.

Die Debug-Ressourcen 16 werden von der Steuereinheit 2 gesteuert und enthalten Komponenten, die erforderlich sind, um die für die Emulation erforderlichen Aktionen vorzunehmen.

Zu diesen Komponenten können beispielsweise gehören:
- eine Steuereinrichtung, welche die restlichen Komponenten der Debug-Ressourcen 16 und auch außerhalb der Debug-Ressourcen vorgesehene Komponenten der programmgesteuerten Einheit steuern kann,
- eine Breakpoint-, Watchpoint- oder Trigger-Logik, durch welche das Auftreten der Zustände oder Ereignisse überwacht wird, auf deren Auftreten mit der Ausführung der eingangs erwähnten oder anderer Aktionen reagiert werden muß,
- ein im folgenden als Monitor-Speicher bezeichneter Speicher, in welchem Debug-Sequenzen gespeichert sind, die auf der CPU 11 ausgeführt werden müssen, um bestimmte Aktionen (beispielsweise das Auslesen oder Verändern von Registerinhalten) ausführen zu können,
- ein im folgenden als Overlay-Speicher bezeichneter Speicher, in welchem Programme gespeichert sind, die beispielsweise zum Testen der Auswirkungen von Änderungen im Anwendungsprogramm anstelle des im Programmspeicher der programmgesteuerten Einheit gespeicherten Anwendungsprogramms ausgeführt werden können, und
- ein sogenannten Trace-Bus zur kontinuierlichen Ausgabe von interessierenden Daten, Adressen, Signalen, und/oder Register- und Speicherinhalten an die Steuereinheit 2.

Der Emulator ermöglicht es auf vielfältige Art und Weise, in der programmgesteuerten Einheit oder in dem diese enthaltenden System auftretende Fehler zu erkennen, zu lokalisieren und zu beheben.

Allerdings zeigt die Erfahrung, daß dies vor allem dann, wenn Fehler in zeitkritischen Anwendungen gesucht, lokalisiert und behoben werden sollen, nicht oder nur mit großen Schwierigkeiten möglich ist. Dies ist beispielsweise der Fall, wenn die programmgesteuerte Einheit einen Elektromotor (z.B. einen AC-Motor) steuern muß. Wird in diesem Fall das von der CPU auszuführende Motorsteuerprogramm unterbrochen, um eine der im Monitor-Speicher gespeicherten Debug-Sequenzen auszuführen (beispielsweise die Debug-Sequenz, die ausgeführt werden muß, um Register- oder Speicherinhalte auszulesen oder zu verändern), so kann es vorkommen, daß der Motor nicht mehr richtig angesteuert wird und sich das System nicht mehr wie sonst (unter normalen Bedingungen) verhält.

Der vorliegenden Erfindung liegt daher die Aufgabe zugrunde, das Verfahren gemäß dem Oberbegriff des Patentanspruchs 1 derart weiterzubilden, daß es sich auch bei zeitkritischen Anwendungen anwenden läßt.

Diese Aufgabe wird erfindungsgemäß durch das in Patentanspruch 1 beanspruchte Verfahren gelöst.

Das erfindungsgemäße Verfahren zeichnet sich dadurch aus, daß die Ausführung der Debug-Sequenz durch das Anwendungsprogramm veranlaßt wird.

Dadurch kann sichergestellt werden, daß das Anwendungsprogramm nicht gerade dann unterbrochen wird, wenn es sich in einer zeitkritischen Phase befindet. Das beanspruchte Emulationsverfahren läßt sich somit auch bei zeitkritischen Anwendungen anwenden.

Vorteilhafte Weiterbildungen der Erfindung sind den Unteransprüchen, der folgenden Beschreibung und der Figur entnehmbar.

Die Erfindung wird nachfolgend anhand eines Ausführungsbeispiels unter Bezugnahme auf die Figur näher erläutert.

Die Figur zeigt den bereits beschriebenen Emulator.

Das im folgenden beschriebene Emulationsverfahren stellt keine besonderen Anforderungen an die Hardware. D.h., das Verfahren kann in der eingangs unter Bezugnahme auf die Figur beschriebenen Anordnung zum Einsatz kommen, und wird auch unter Bezugnahme auf diese Figur beschrieben.

Bei dem hier beschriebenen Emulationsverfahren wird die Ausführung der Debug-Sequenzen nicht wie bei herkömmlichen Emulationsverfahren durch die Steuereinheit 2 oder die Debug-Ressourcen 16, sondern durch das Anwendungsprogramm veranlaßt

Wie später noch besser verstanden werden wird, kann hierbei (muß aber nicht) darauf verzichtet werden, die Ausführung der Debug-Sequenz vom Auftreten bestimmter Zustände oder Ereignisse abhängig zu machen.

Wenn die Ausführung der Debug-Sequenzen vom Auftreten bestimmter Zustände oder Ereignisse abhängig gemacht wird, können diese Zustände oder Ereignisse die selben oder andere Zustände oder Ereignisse sein wie beim eingangs beschriebenen herkömmlichen Emulationsverfahren.

Für die nun folgenden näheren Erläuterungen sei angenommen, daß die zu untersuchende Anwendung der programmgesteuerten Einheit die Steuerung eines Motors ist; das hierzu auszuführende Programm ist ein Motorsteuerungsprogramm. Es sei jedoch bereits an dieser Stelle darauf hingewiesen, daß hierauf keine Einschränkung besteht. Es kann sich selbstverständlich auch um eine beliebige andere Anwendung handeln.

Für das neue Emulationsverfahren wird zunächst ein Programm geschrieben, das einerseits die programmgesteuerte Einheit in der zu untersuchenden Anwendung derselben, im betrachteten Beispiel also als Motorsteuereinrichtung arbeiten läßt, und das andererseits in Phasen des Motorsteuerungsprogramms, in welchen die Motorsteuerung dadurch nicht gestört wird, also in nicht zeitkritische Phasen die Ausführung von Debug-Sequenzen veranlaßt.

Die Basis für ein solches Programm ist das im normalen Betrieb der programmgesteuerten Einheit auszuführende Anwendungsprogramm, im betrachteten Beispiel also das Motorsteuerungsprogramm. In dieses Programm werden Befehle eingebaut, durch welche die im Monitor-Speicher gespeicherten Debug-Sequenzen aufgerufen werden. Welche der im Monitor-Speicher gespeicherten Debug-Sequenzen hier jeweils aufgerufen wird, hängt von den Aktionen ab, an welchen jeweils ein Bedarf besteht.

Dieses, im folgenden als modifiziertes Anwendungsprogramm bezeichnete Programm wird bei der Emulation der programmgesteuerten Einheit anstelle des im normalen Betrieb der programmgesteuerten Einheit ausgeführten (nicht modifizierten) Anwendungsprogrammes auf der CPU 11 zur Ausführung gebracht.

Dies geschieht im betrachteten Beispiel dadurch, daß die Steuereinheit 2 das modifizierte Anwendungsprogramm in den Overlay-Speicher lädt, und dann dafür sorgt, daß das von der CPU 11 ausgeführte Programm nicht mehr aus dem im normalen Betrieb der programmgesteuerten Einheit verwendeten Programmspeicher, sondern aus dem Overlay-Speicher geladen wird. Dies kann beispielsweise dadurch geschehen, daß in einer sogenannten Speicher-Mapping-Einheit, die Zuordnungsvorschrift geändert wird, durch welche festgelegt wird, auf welche Speichereinrichtung zugegriffen werden muß, um die von der CPU angeforderten und durch eine Adresse spezifizierten Daten zu lesen; dadurch kann erreicht werden, daß die CPU 11 dann, wenn sie im Programmspeicher gespeicherte Daten anfordert, im Overlay-Speicher gespeicherte Daten zugeführt bekommt.

Das modifizierte Programm kann aber auch in einen beliebigen anderen Speicher geschrieben werden, beispielsweise in den Programmspeicher, in welchem die von der CPU 11 auszuführenden Programme normalerweise gespeichert sind, oder in einen beliebigen anderen internen oder externen Speicher, auf welchen die CPU Zugriff hat.

Durch die Ausführung des im Overlay-Speicher modifizierten Anwendungsprogramms werden durch die CPU 11 die für die zu untersuchende Anwendung (die Motorsteuerung) durchzuführenden Aktionen ausgeführt, und darüber hinaus bei Bedarf auch für die Emulation erforderliche oder hilfreiche Aktionen ausgeführt, beispielsweise ein Auslesen oder Verändern von Speicher- oder Registerinhalten.

Vorzugsweise signalisiert die programmgesteuerte Einheit der Steuereinheit 2 die Ausführung von Debug-Sequenzen, deren Ausführung von der programmgesteuerten Einheit veranlaßt wurde. Das Signal, durch welches dieses geschieht, wird im folgenden als Debug-Sequenz-Signal bezeichnet. Die Erzeugung des Debug-Sequenz-Signals läßt sich durch eine einfache Logik bewerkstelligen. Diese Logik muß lediglich erkennen können, daß die von der CPU ausgeführten Befehle gerade aus dem Monitor-Speicher geholt werden.

Die Übermittlung des Debug-Sequenz-Signals an die Steuereinheit 2 erweist sich als vorteilhaft, weil die programmgesteuerte Einheit und die Steuereinheit dadurch synchronisiert werden können. Dadurch kann verhindert werden,
- daß die Steuereinheit in den Emulations-Ressourcen gespeicherte Daten löscht oder überschreibt, die zur Ausführung der Debug-Sequenz benötigt werden oder benötigt werden können (beispielsweise die die Debug-Sequenz repräsentierenden Befehlsdaten im Monitor-Speicher), und
- daß die Steuereinheit in den Debug-Ressourcen gespeicherte Daten ausliest und auswertet, bevor die auszuwertenden Daten dort gespeichert sind, oder nachdem die auszuwertenden Daten bereits wieder gelöscht oder überschrieben oder schon veraltet sind.

Im betrachteten Beispiel wird der Steuereinheit durch eine steigende Flanke im Debug-Sequenz-Signal signalisiert, daß die Ausführung einer Debug-Sequenz begonnen hat, und durch eine fallende Flanke im Debug-Sequenz-Signal signalisiert, daß die Ausführung der Debug-Sequenz beendet ist (oder umgekehrt). Dann kann die Steuereinheit an der steigenden Flanke (am hohen Pegel) des Debug-Sequenz-Signals erkennen, daß sie bis auf weiteres (bis zur fallenden Flanke) in den Debug-Ressourcen keine oder nur bestimmte Daten löschen oder überschreiben darf, und daß von ihr danach (nach der steigenden und vor der fallenden Flanke) aus den Emulations-Ressourcen ausgelesene und ausgewertete Daten möglicherweise noch nicht oder nicht mehr die eigentlich auszuwertenden Daten sind; an der fallenden Flanke (am niedrigen Pegel) des Debug-Sequenz-Signals kann die Steuereinheit erkennen, daß sie nun wieder Daten in den Debug-Ressourcen löschen und überschreiben kann, und/oder daß er sofort oder alsbald mit dem Auslesen und Auswerten von in den Debug-Ressourcen gespeicherten Daten beginnen sollte oder muß.

Es wurde somit eine Möglichkeit gefunden, durch welche auch für zeitkritische Anwendungen eingesetzte programmgesteuerte Einheiten wunschgemäß und ohne Störung des die programmgesteuerte Einheit enthaltenden Systems emuliert werden können.

Das beschriebene Emulationsverfahren zeichnet sich dadurch aus, daß die Ausführung von (Debug-)Sequenzen, deren Ausführung bislang ausschließlich durch die Steuereinheit 2 und/oder die Debug-Ressourcen 16 veranlaßt wurde, nunmehr durch das Anwendungsprogramm veranlaßt werden kann. Dadurch arbeitet der Emulator mit einem vom Anwendungsprogramm vorgegebenen Timing; das Anwendungsprogramm bestimmt, wann welche Debug-Sequenz aufgerufen wird.

Vorteilhaft ist ferner, daß die Veranlassung der Ausführung der Debug-Sequenzen durch im Anwendungsprogramm enthaltene Standard-Befehle (Calls, Jumps etc.) erfolgt. Dies erweist sich als vorteilhaft, weil der Software-Entwickler dadurch keine detaillierten Kenntnisse über die zur Emulation durchzuführenden Aktionen haben muß, aber durch die Auswahl der auszuführenden Debug-Sequenz und des Zeitpunktes der Ausführung dennoch bestimmen kann, zu welchen Zeitpunkten das Anwendungsprogramm wie lange unterbrochen wird.

Das vorliegend beschriebene Emulationsverfahren ist nicht als vollwertiger Ersatz für das eingangs beschriebene herkömmliche Emulationsverfahren konzipiert und kann auch zusammen mit dem herkömmlichen Emulationsverfahren benutzt werden. Für bestimmte Aktionen ist das herkömmliche Emulationsverfahren sogar besser geeignet als das hier vorgestellte neue Emulationsverfahren. Dies sind die Aktionen, bei welchen als Reaktion auf das Auftreten eines bestimmten (durch die Trigger-Logik detektierbaren) Zustandes oder Ereignisses eine Aktion ausgeführt werden muß, die nicht die Ausführung einer Debug-Sequenz erfordert, also beispielsweise das Starten und/oder Beenden der Aufzeichnung von interessierenden Daten, Adressen, und sonstigen Signalen in den Trace-Speicher. Unabhängig hiervon wäre auch denkbar, daß durch die Trigger-Logik während der Ausführung des modifizierten Anwendungsprogrammes das Auftreten bestimmter Zustände oder Ereignisse überwacht wird und abhängig hiervon der Monitor-Speicher umprogrammiert wird, wodurch die Steuereinheit Einfluß darauf nehmen kann, welche Debug-Sequenz beim nächsten Debug-Sequenz-Aufruf aus dem modifizierten Anwendungsprogramm ausgeführt wird.

### Bezugszeichenliste

- 1: programmgesteuerte Einheit
- 2: Steuereinheit

- 11: CPU
- 12: Peripherie-Einheit
- 13: Peripherie-Einheit
- 14: Peripherie-Einheit
- 15: Bus
- 16: Debug-Ressourcen

## Patentansprüche

1. Verfahren zum Emulieren einer programmgesteuerten Einheit, bei welchem ein von der programmgesteuerten Einheit (1) ausgeführtes Anwendungsprogramm unterbrochen werden kann, um eine Debug-Sequenz auszuführen, durch welche für die Emulation erforderliche oder hilfreiche Aktionen ausgeführt werden,
**dadurch gekennzeichnet,**
**daß** die Ausführung der Debug-Sequenz durch das Anwendungsprogramm veranlaßt wird.

2. Verfahren nach Anspruch 1,
**dadurch gekennzeichnet,**
**daß** das Anwendungsprogramm, das während der Emulation der programmgesteuerten Einheit (1) von dieser ausgeführt wird, Debug-Sequenz-Aufrufe enthält.

3. Verfahren nach einem der vorhergehenden Ansprüche,
**dadurch gekennzeichnet,**
**daß** die vom modifizierten Anwendungsprogramm aufgerufenen Debug-Sequenzen in einem Monitor-Speicher der programmgesteuerten Einheit (1) gespeichert sind.

4. Verfahren nach Anspruch 3,
**dadurch gekennzeichnet,**
**daß** die im Monitor-Speicher gespeicherten Debug-Sequenzen einer die Emulation steuernden Steuereinheit in den Monitor-Speicher geladen werden.

5. Verfahren nach einem der vorhergehenden Ansprüche,
**dadurch gekennzeichnet,**
**daß** einer die Emulation steuernden Steuereinheit (2) von der programmgesteuerten Einheit (1) signalisiert wird, wenn die programmgesteuerte Einheit eine Debug-Sequenz ausführt.
